(19) **Europäisches Patentamt**
**European Patent Office**
**Office européen des brevets**

(11) **EP 3 878 170 B1**

(12) **FASCICULE DE BREVET EUROPEEN**

(45) Date de publication et mention
de la délivrance du brevet:
**14.08.2024 Bulletin 2024/33**

(21) Numéro de dépôt: **19813086.6**

(22) Date de dépôt: **22.10.2019**

(51) Classification Internationale des Brevets (IPC):
*H04N 13/128* (2018.01)    *H04N 13/111* (2018.01)
*H04N 13/282* (2018.01)

(52) Classification Coopérative des Brevets (CPC):
**H04N 13/128; H04N 13/111; H04N 13/282**

(86) Numéro de dépôt international:
**PCT/FR2019/052509**

(87) Numéro de publication internationale:
**WO 2020/094942 (14.05.2020 Gazette 2020/20)**

(54) **SYNTHÈSE DE VUES**

ANSICHTSSYNTHESE

VIEW SYNTHESIS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.11.2018 FR 1860351**

(43) Date de publication de la demande:
**15.09.2021 Bulletin 2021/37**

(73) Titulaire: **Orange**
**92130 Issy-les-Moulineaux (FR)**

(72) Inventeurs:
• **BOISSONADE, Patrick**
**92326 Châtillon Cedex (FR)**

• **JUNG, Joël**
**92326 Châtillon Cedex (FR)**

(56) Documents cités:
**WO-A1-2013/030452    WO-A1-2014/183787
WO-A1-2016/067541**

• **ERHAN EKMEKCIOGLU ET AL: "Content
Adaptive Enhancement of Multi-View Depth Maps
for Free Viewpoint Video", IEEE JOURNAL OF
SELECTED TOPICS IN SIGNAL PROCESSING,
IEEE, US, vol. 5, no. 2, 1 April 2011 (2011-04-01),
pages 352 - 361, XP011350690, ISSN: 1932-4553,
DOI: 10.1109/JSTSP.2010.2052783**

**Description**

1. Domaine de l'invention

La présente invention se rapporte de manière générale au domaine de la synthèse d'images.

La présente invention s'applique plus particulièrement à la synthèse de points de vue intermédiaires non capturés, à partir d'images de plusieurs vues 2D (deux dimensions), 360°, 180°, etc, qui sont capturées pour générer une vidéo immersive, telle que notamment une vidéo 360°, 180°, etc.

L'invention peut notamment, mais non exclusivement, s'appliquer au décodage vidéo mis en oeuvre dans les décodeurs vidéo actuels AVC (abréviation anglaise de « Advanced Video Coding et leurs extensions MVC (abréviation anglaise de « Multiview Video Coding »), 3D-AVC, MV-HEVC, 3D-HEVC, etc.

2. Art antérieur

Dans un contexte de vidéo immersive, c'est à dire où le spectateur a la sensation d'être immergé dans une scène 3D (trois dimensions), la scène est classiquement capturée par un ensemble de caméras. Ces caméras peuvent être :

- de type 2D, pour capturer un angle particulier de la scène, et/ou
- de type 360°, 180°, ou autres, pour capturer toute la scène à 360 degrés, 180 degrés ou autres, autour de la caméra.

Les images de telles vues capturées sont traditionnellement codées, puis décodées par le terminal du spectateur. Néanmoins, afin de fournir une qualité d'expérience suffisante, et donc une qualité visuelle et une bonne immersion, afficher les vues capturées est insuffisant. Les images d'une multitude de vues, dites intermédiaires, doivent être calculées, à partir des images des vues décodées.

Le calcul d'images de ces vues intermédiaires est réalisé par un algorithme dit « de synthèse » de vue (view synthesis algorithm en anglais). Un algorithme de synthèse est capable, à partir d'images de N vues, avec $N \geq 2$, de synthétiser une image d'un point de vue intermédiaire situé à n'importe quel endroit de l'espace. L'image d'une vue considérée parmi N comprend une composante de texture et une carte de profondeur qui indique la distance séparant les différents éléments de la scène de la caméra qui a capturé l'image de cette vue. Ainsi, l'image d'une vue intermédiaire obtenue par synthèse comprend elle aussi une composante de texture synthétisée à partir des N composantes de texture des images des N vues et une carte de profondeur synthétisée à partir des N cartes de profondeur des images des N vues.

Pour une vue considérée parmi N, la carte de profondeur est soit capturée, soit calculée à partir des N composantes de texture. Cependant, dans les deux cas, une telle carte de profondeur peut contenir de nombreuses erreurs qui sont soit liées à la capture, soit liées au calcul, soit liées à la compression des images des N vues.

De telles erreurs se répercutent donc inévitablement dans l'image d'une vue synthétisée à partir de l'image de chacune de ces N vues, ce qui réduit notablement les performances des algorithmes de synthèse actuels.

Un algorithme de synthèse bien connu du type précité est par exemple l'algorithme VSRS (en anglais « View Synthesis Reference Software »). Cet algorithme met en oeuvre une projection des N cartes de profondeur à une position correspondant à l'image de la vue à synthétiser dans la vidéo à générer, afin de déterminer une unique carte de profondeur synthétisée. Cette carte de profondeur est alors utilisée pour retrouver les informations de texture associées à chaque pixel des N composantes de texture.

Un inconvénient de cette projection réside dans le fait que certains pixels sont manquants dans les N cartes de profondeur projetées, car ne correspondant à aucun des pixels des N cartes de profondeur, avant projection. Cette absence de correspondance peut résulter soit d'un manque de précision sur les pixels contenus dans les N cartes de profondeur utilisées pour la projection, soit parce que les pixels manquants correspondent à des zones non visibles dans les images des N vues (occlusion) contenant les N cartes de profondeur.

De telles erreurs de projection se répercutent donc inévitablement dans l'image d'une vue qui est synthétisée à partir de l'image de chacune de ces N vues.

Les erreurs induites lors du calcul initial d'une carte profondeur, dépendant aussi de la quantification de cette information, c'est-à-dire du nombre de valeurs que cette carte de profondeur peut prendre, mais aussi du niveau de compression appliqué, se traduisent sur la carte de profondeur par deux types de défauts :

- du flou si les erreurs sont faibles,
- des défauts grossiers si ces erreurs sont importantes.

Lorsque l'écart entre ce que peut voir la caméra qui a capturé l'image d'une vue et ce que doit voir la caméra virtuelle augmente, les défauts de synthèse deviennent de plus en plus importants, et passent du flou à des défauts grossiers, ces derniers devant être absolument évités pour ne pas nuire à la sensation d'immersion du spectateur.

Les techniques de l'état de l'art ne prennent pas en compte le fait que les cartes de profondeurs disponibles, destinées à être projetées lors de la synthèse de l'image d'une vue intermédiaire, présentent des erreurs. Il en résulte que les cartes de profondeur obtenues à l'issue de la projection des cartes de profondeurs disponibles contiennent également des erreurs.

Le document WO 2013/030452 concerne un procédé de synthèse d'images qui vise à supprimer le bruit dans les cartes de profondeur obtenues en vue de cette synthèse, en filtrant de manière conjointe toutes les valeurs de profondeur des cartes de profondeurs projetées issues d'une projection de ces cartes de profondeur. Le document WO 2016/067541 concerne la modification de chaque pixel d'une carte de profondeur associée à une image photographique.

3. Objet et résumé de l'invention

Un des buts de l'invention est de remédier à des inconvénients de l'état de la technique précité.

A cet effet, un objet de la présente invention concerne un procédé de synthèse d'une image d'une vue à partir d'images de N (N≥2) vues, selon la revendication 1.

Compte tenu du fait qu'une modification conditionnelle est appliquée à un ou plusieurs pixels projetés d'au moins une des cartes de profondeur projetées, l'invention permet avantageusement de corriger des erreurs dans ladite au moins une carte de profondeur projetée. Pour un pixel donné d'une telle carte de profondeur projetée, ces erreurs de projection peuvent résulter :

- de bruits de quantification introduits lors de la quantification numérique sur une pluralité de bits de la valeur de profondeur de chaque pixel de la carte de profondeur de l'image d'une vue, à partir de laquelle a été obtenue la carte de profondeur projetée,
- d'erreurs introduites lors de la compression de la carte de profondeur par un codeur de type HEVC, 3D-HEVC, etc.,
- d'erreurs introduites lors de la projection dans l'espace réel de la carte de profondeur de l'image de la vue.

Tous les pixels d'une carte de profondeur projetée ne sont pas obligatoirement modifiés. Ils le sont si une information de fiabilité, affectée à chacun de ces pixels, est à une certaine valeur. Cette information de fiabilité est avantageusement calculée de manière à ce que la modification qui est appliquée à la valeur du pixel donné de la carte de profondeur considérée et qui est conditionnée par cette information de fiabilité n'entraîne que des artefacts de type flou dans l'image de la vue synthétisée.

En outre, une telle modification utilise la valeur de profondeur d'un pixel ayant une position correspondante à celle du pixel donné, dans une autre carte de profondeur projetée, une telle valeur de profondeur étant considérée comme pertinente pour corriger la valeur de profondeur erronée du pixel donné.

Ainsi, grâce à l'invention, une carte de profondeur projetée considérée est entachée de beaucoup moins d'erreurs qu'une carte de profondeur projetée de l'état de l'art. Il en résulte une très nette amélioration de la qualité de l'image d'une vue synthétisée à partir d'une pluralité d'images de vues, lorsque l'une au moins de ces images est associée à une carte de profondeur qui contient des erreurs avant et/ou après projection.

Selon un mode de réalisation de l'invention, la modification utilise une pondération de la valeur de profondeur du pixel de position correspondante audit au moins un pixel donné, dans ladite au moins une autre carte de profondeur projetée.

Un tel mode de réalisation permet d'attribuer une importance plus ou moins élevée à un pixel de position correspondante à celle du pixel donné, dans une autre carte de profondeur projetée, ce qui, de ce fait, impactera de manière plus ou moins élevée la modification de la valeur de profondeur du pixel donné.

Selon un mode de réalisation de l'invention, le niveau de confiance d'un pixel d'une carte de profondeur donnée est calculé comme une variation de la valeur de profondeur dudit pixel, ladite variation correspondant à une erreur de projection en nombre de pixels autorisé.

Un tel calcul du niveau de confiance permet avantageusement de prendre en compte la qualité réelle de projection de ladite au moins une autre carte de profondeur, en plus de la distance de positionnement entre la caméra qui a capté l'image de la vue, pour laquelle la projection de la carte de profondeur a généré la carte de profondeur projetée considérée, et la caméra qui a capté l'image de ladite au moins une autre vue, pour laquelle la projection de la carte de profondeur a généré l'autre carte de profondeur projetée.

Selon un mode de réalisation de l'invention, le niveau de confiance d'un pixel est pondéré par un paramètre de codage de l'image de la vue à laquelle est associée la carte de profondeur qui contient le pixel.

Un tel mode de réalisation permet d'affiner le calcul du niveau de confiance d'un pixel donné en prenant en compte le niveau de qualité de compression, tel que par exemple, la valeur du pas de quantification qui a été utilisé durant le codage de l'image de la vue à laquelle est associée la carte de profondeur qui contient ledit pixel, ou encore la position de cette image dans la hiérarchie de codage.

Selon un mode de réalisation de l'invention, la modification de la valeur de profondeur du pixel donné consiste à remplacer ladite valeur de profondeur par une valeur qui est calculée à partir de ladite valeur de profondeur et de la valeur de profondeur du pixel de position correspondante à celle dudit au moins un pixel donné dans ladite au moins une autre carte de profondeur projetée, lesdites valeurs de profondeur étant pondérées chacune par leur niveau de confiance respectif.

Selon un mode de réalisation de l'invention, l'information de fiabilité est générée comme suit :

- déterminer dans l'ensemble des N cartes de profondeurs projetées, pour une même position que celle du pixel donné, quel est le pixel qui a la valeur de profondeur maximale et quel est le pixel qui a la valeur de profondeur minimale,
- calculer une différence entre la valeur de profondeur dudit pixel donné et la valeur de profondeur minimale déterminée,
- comparer la différence calculée à un seuil,
- générer une information de fiabilité par rapport à la valeur de profondeur minimale déterminée, dont la valeur est fonction du résultat de la comparaison,
- calculer une autre différence entre la valeur de profondeur maximale déterminée et la valeur de profondeur du dudit pixel donné,
- comparer l'autre différence calculée audit seuil,
- générer une information de fiabilité par rapport à la valeur de profondeur maximale déterminée, dont la valeur est fonction du résultat de la comparaison.

Selon un tel mode de réalisation, l'information de fiabilité pour un pixel donné d'une carte de profondeur projetée considérée est avantageusement quantifiée sur deux niveaux :

- un premier niveau qui tient compte de la différence entre la valeur de profondeur du pixel donné dans la carte de profondeur projetée et la valeur de profondeur minimale déterminée pour les N cartes de profondeur projetées, pour les N pixels de position correspondante à celle du pixel donné,
- un deuxième niveau qui tient compte de la différence entre la valeur de profondeur maximale déterminée pour les N cartes de profondeur projetées, pour les N pixels de position correspondante à celle du pixel donné, et la valeur de profondeur du pixel donné dans la carte de profondeur projetée.

De cette manière, pour un pixel donné d'une carte de profondeur projetée, en fonction des deux informations de fiabilité associées au pixel donné, les valeurs de profondeur respectives des pixels de position correspondante à celle du pixel donné dans les N cartes de profondeur projetées peuvent être sélectionnées de deux manières différentes pour la modification de la valeur de profondeur du pixel donné. La modification de la valeur de profondeur du pixel donné est ainsi rendue plus précise.

Selon un mode de réalisation de l'invention, le seuil de comparaison est égal à la moyenne des N variations de la valeur de profondeur de chaque pixel de position correspondante à celle dudit pixel donné dans leur carte de profondeur respective.

Un tel mode de réalisation de calcul du seuil de comparaison permet d'optimiser la réduction des artefacts de type flou dans l'image de la vue synthétisée.

Selon un mode de réalisation de l'invention, le seuil de comparaison est égal à la moyenne des N variances de la valeur de profondeur de chaque pixel de position correspondante à celle dudit pixel donné dans leur carte de profondeur respective.

Un tel mode de réalisation de calcul du seuil de comparaison permet d'optimiser la réduction des artefacts de type flou dans l'image de la vue synthétisée, tout en prenant en compte la qualité intrinsèque des N cartes de profondeur projetées.

Les différents modes ou caractéristiques de réalisation précités peuvent être ajoutés indépendamment ou en combinaison les uns avec les autres, au procédé de synthèse défini ci-dessus.

L'invention concerne également un dispositif de synthèse d'une image d'une vue à partir d'images de N (N≥2) vues, selon la revendication 8.

Un tel dispositif de synthèse est notamment apte à mettre en oeuvre le procédé de synthèse précité, selon l'un quelconque de ses modes de réalisation précités.

L'invention concerne également un procédé de décodage d'un signal de données représentatif d'un ensemble d'images de N (N≥2) vues codées, selon la revendication 9.

L'invention concerne également un dispositif de décodage d'un signal de données représentatif d'un ensemble d'images de N (N≥2) vues codées, selon la revendication 10.

L'invention concerne encore un programme d'ordinateur selon la revendication 11.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de synthèse ou de décodage précité.

4. Brève description des dessins

D'autres caractéristiques et avantages apparaîtront plus clairement à la lecture de plusieurs modes de réalisation préférés, donnés à titre de simples exemples illustratifs et non limitatifs, et décrits ci-dessous en référence aux dessins annexés, dans lesquels :

- la figure 1 représente les principales actions exécutées par le procédé de synthèse selon un mode de réalisation de l'invention,
- la figure 2 représente un exemple d'image utilisée dans le procédé de synthèse de la figure 1,
- les figures 3A à 3C représentent un exemple de calcul d'un niveau de confiance utilisé dans le procédé de synthèse de la figure 1,
- la figure 4 représente un exemple de calcul d'une information de fiabilité utilisée dans le procédé de synthèse de la figure 1,
- la figure 5 représente un dispositif de synthèse mettant en oeuvre le procédé de synthèse de la figure 1,
- les figures 6A et 6B représentent des exemples d'agencement du dispositif de synthèse de la figure 5, dans le cas où les images servant à la synthèse d'images ont été préalablement décodées.

5. Description du principe général de l'invention

L'invention propose principalement un schéma de synthèse d'une image d'une vue intermédiaire à partir d'une pluralité d'images de respectivement une pluralité de vues, chaque vue représentant à l'instant courant une scène 3D selon une position donnée ou un angle de vue donné.

Pour chaque image d'une vue dans la pluralité d'images, la carte de profondeur de l'image de la vue est projetée de façon classique à une position correspondant à l'image d'une vue à synthétiser.

L'invention se caractérise par l'application d'une modification conditionnelle de la valeur de profondeur de chaque pixel considéré dans une carte de profondeur projetée donnée. Une telle modification permet ainsi de compenser les erreurs sur les valeurs de profondeur qui peuvent provenir :

- d'erreurs introduites lors du calcul des valeurs de profondeur de la carte de profondeur de l'image d'une vue, à partir de laquelle a été obtenue la carte de profondeur projetée donnée,
- d'erreurs introduites lors de la compression de données de l'image de la vue,
- d'erreurs introduites lors de la projection dans l'espace réel de la carte de profondeur de l'image de la vue.

6. Exemples de mise en oeuvre de schéma de synthèse

On décrit ci-après un procédé de synthèse d'une image d'une vue à partir d'images d'une pluralité de vues, un tel procédé pouvant être utilisé dans ou avec tout type de décodeurs vidéo actuels AVC et HEVC et leurs extensions (MVC, 3D-AVC, MV-HEVC, 3D-HEVC, etc.), ou autre.

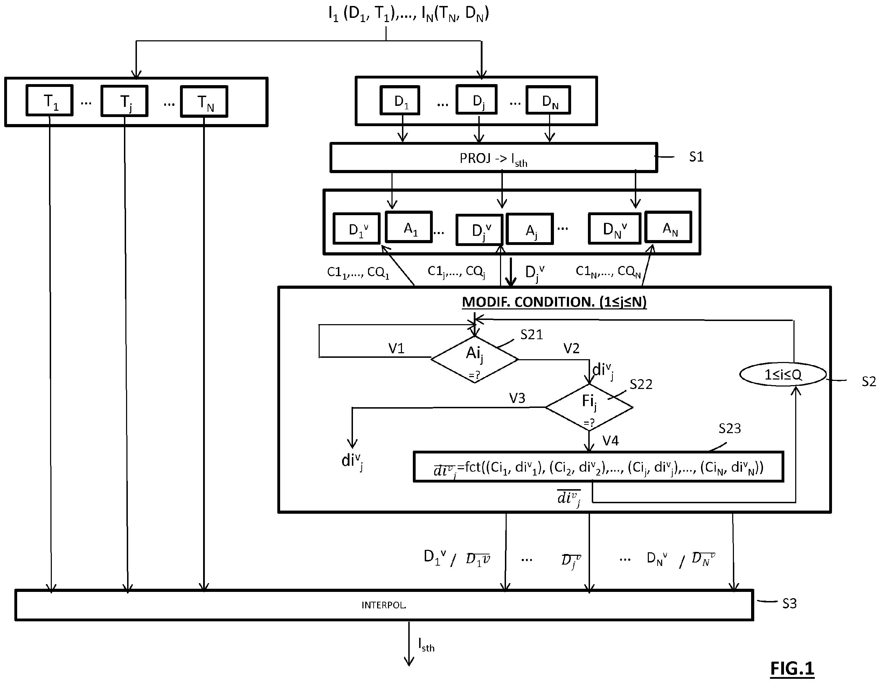

En référence à la figure 1, un tel procédé de synthèse utilise N images $I_1$, $I_2$,..., $I_j$,..., $I_N$ de respectivement N vues, avec $1 \leq j \leq N$ et $N \geq 2$, la pluralité de vues représentant une scène 3D selon respectivement une pluralité d'angles de vue ou une pluralité de positions/orientations. De façon classique :

- l'image $I_1$ comprend une composante de texture $T_1$ et une carte de profondeur $D_1$,
- l'image $I_2$ comprend une composante de texture $T_2$ et une carte de profondeur $D_2$,
- ...,
- l'image $I_j$ comprend une composante de texture $T_j$ et une carte de profondeur $D_j$,
- ...,
- l'image $I_N$ comprend une composante de texture $T_N$ et une carte de profondeur $D_N$.

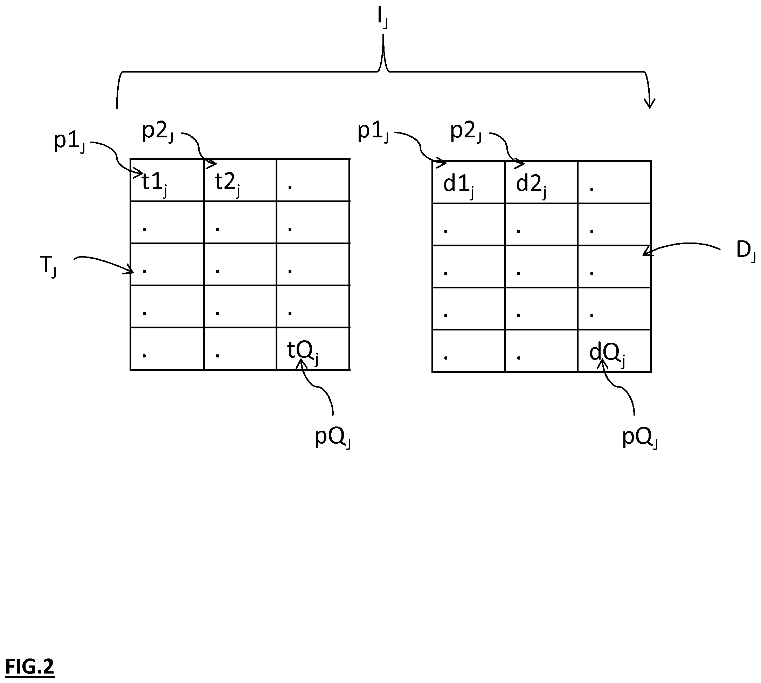

Pour une image $I_j$ donnée, comme représenté sur la figure 2 :

- sa composante de texture $T_j$ comprend Q ($Q \geq 1$) points $p1_j, p2_j,...., pQ_j$ affectés chacun d'une valeur de texture correspondante $t1_j, t2_j,...., tQ_j$,
- sa carte de profondeur $D_j$ comprend les Q points $p1_j, p2_j,...., pQ_j$ affectés chacun d'une valeur de profondeur correspondante $d1_j, d2_j,...., dQ_j$.

En S1 sur la figure 1, les cartes de profondeur $D_1, D2,..., D_j,..., D_N$ sont projetées à une position correspondant à une image $I_{sth}$ d'un vue à synthétiser.

Une telle projection est mise en oeuvre par un algorithme de projection, par exemple du type DIBR (Abréviation anglaise de « Depth Image Based Rendering »).

A l'issue d'une telle projection, sont obtenues N cartes de profondeur projetées $D_1^v, D_2^v,..., D_j^v,..., D_N^v$. Une carte de profondeur $D_j$ considérée parmi N comprend les Q points $p1_j, p2_j,...., pQ_j$ affectés chacun d'une valeur de profondeur correspondante $d1^v_j, d2^v_j,...., dQ^v_j$.

De telles valeurs de profondeur ne sont pas systématiquement correctes compte tenu notamment :

- de bruit de quantification introduit lors de la quantification numérique sur une pluralité de bits de chacune des valeurs de profondeur $d1_j, d2_j,...., dQ_j$, et/ou
- dans le cas où la carte de profondeur $D_j$ a subi une compression par un codeur de type HEVC, 3D-HEVC, etc., d'erreurs introduites lors de cette compression, et/ou
- d'erreurs introduites lors de la projection dans l'espace réel de la carte de profondeur $D_j$.

De façon connue en soi, les N cartes de profondeur projetées $D_1^v, D_2^v,..., D_j^v,..., D_N^v$ sont respectivement associées à N cartes d'attribut $A_1, A_2,..., A_j,..., A_N$.

Pour toute carte de profondeur projetée considérée $D_j^v$ ($1 \leq j \leq N$), une carte d'attribut indique pour chaque point/pixel $p1_j$ à $pQ_j$ de la carte de profondeur $D_j$, si leur projection est valide ou non.

S'agissant par exemple du point $p1_j$ de la carte de profondeur $D_j$ :

- une valeur d'attribut $A1_j = V1$ est associée au point $p1_j$ de la carte de profondeur projetée $D_j^v$ pour indiquer qu'aucune valeur de profondeur n'a été affectée au point $p1_j$,
- une valeur d'attribut $A1_j = V2$ est associée au point $p1_j$ de la carte de profondeur projetée $D_j^v$ pour indiquer qu'une valeur de profondeur a été affectée au point $p1_j$.

L'absence d'attribution d'une valeur de profondeur à un point/pixel d'une carte de profondeur projetée peut se produire lors de la projection S1 de cette carte de profondeur, à l'issue de laquelle aucune valeur de profondeur n'a pu être affectée au point résultant de la projection. Ce point sans valeur de profondeur associée constitue alors une zone de « trou » ou « hole » en anglais.

Dans cet exemple, chaque valeur d'attribut d'une carte d'attribut $A_1, A_2,..., A_j,..., A_N$ est binaire. A cet effet, V1=0 et V2=1 ou inversement. Selon un autre exemple, les valeurs d'une carte d'attribut $A_1, A_2,..., A_j,..., A_N$ sont des entiers compris dans l'intervalle [0, +∞].

En S2, sur la figure 1, pour au moins une carte de profondeur projetée considérée $D_j^v$, une modification conditionnelle est appliquée aux valeurs de profondeur $d1^v_j, d2^v_j,..., dQ^v_j$.

Une telle modification conditionnelle se déroule comme suit.

En S21, pour un pixel donné $p_i_j$ ($1 \leq i \leq Q$) de la carte de profondeur projetée $D_j^v$, il est déterminé si l'attribut $A_i_j$ associé au pixel $p_i_j$ est à une première valeur V1 ou à une deuxième valeur V2.

Si l'attribut $A_i_j$ a pour valeur V1, le procédé de modification conditionnelle n'est pas mis en oeuvre et le pixel suivant de la carte de profondeur projetée $D_j^v$ est alors considéré.

Si l'attribut $A_i_j$ a pour valeur V2, en S22, il est déterminé si une information de fiabilité $F_i_j$, associée au pixel $p_i_j$, est à une première valeur V3 ou à une deuxième valeur V4.

Selon un exemple de réalisation non exhaustif, V3=0 et V4=1 ou inversement.

Si l'information de fiabilité $F_i_j$ est à la première valeur V3, la valeur de profondeur $d_i^v_j$ du pixel $p_i_j$ de la carte de

profondeur projetée $D_j^v$ n'est pas modifiée.

Si l'information de fiabilité $Fi_j$ est à la deuxième valeur V4, la valeur de profondeur $di_j^v$ du pixel $pi_j$ de la carte de profondeur projetée $D_j^v$ est modifiée en S23. Selon l'invention, la valeur de profondeur $di_j^v$ est modifiée en fonction d'une valeur de profondeur d'un pixel situé dans la même position que celle du pixel $pi_j$, dans au moins une autre carte de profondeur projetée $D_1^v, D_2^v, ..., D_N^v$. Ainsi, la valeur de profondeur est modifiée en fonction :

- de la valeur de profondeur $di_1^v$ associée au pixel $pi_1$ de la carte de profondeur projetée $D_1^v$, et/ou,
- de la valeur de profondeur $di_2^v$ associée au pixel $pi_2$ de la carte de profondeur projetée $D_2^v$, si la valeur de profondeur $di_2^v$ existe ($Ai_2=V2$) et/ou,
- ...,
- de la valeur de profondeur $di_N^v$ associée au pixel $pi_N$ de la carte de profondeur projetée $D_N^v$ si la valeur de profondeur $di_N^v$ existe ($Ai_N=V2$).

Selon l'invention, la modification S23 utilise une pondération des valeurs de profondeur $d1_j^v, d2_j^v,..., dQ_j^v$. Ainsi :

- la valeur de profondeur $di_1^v$ est pondérée par un coefficient $Ci_1$,
- la valeur de profondeur $di_2^v$ est pondérée par un coefficient $Ci_2$,
- ...,
- la valeur de profondeur $di_N^v$ est pondérée par un coefficient $Ci_N$.

Comme cela sera décrit plus loin dans la description :

- le coefficient $Ci_1$ correspond à un niveau de confiance qui a été attribué à la valeur de profondeur $di_1^v$ du pixel $pi_1$ de la carte de profondeur projetée $D_1^v$,
- le coefficient $Ci_2$ correspond à un niveau de confiance qui a été attribué à la valeur de profondeur $di_2^v$ du pixel $pi_2$ de la carte de profondeur projetée $D_2^v$,
- ...,
- le coefficient $Ci_N$ correspond à un niveau de confiance qui a été attribué à la valeur de profondeur $di_N^v$ du pixel $pi_N$ de la carte de profondeur projetée $D_N^v$.

Bien entendu, un niveau de confiance n'est attribué que si le pixel considéré dans une carte de profondeur projetée donnée a une valeur de profondeur qui correspond à celle du pixel de même position dans la carte de profondeur correspondante non encore projetée.

A l'issue de la modification S23, est obtenue une valeur de profondeur modifiée $\overline{di_j^v}$ du pixel $pi_j$ de la carte de profondeur projetée $D_j^v$ selon la relation suivante :

$$\overline{di_j^v} = fonction\ ((Ci_1, di_1^v), (Ci_2, di_2^v), ..., (Ci_N, di_N^v)),$$

sous réserve que $Ai_1=V2, Ai_2=V2,..., Ai_N=V2$.

La modification conditionnelle S2 qui vient d'être décrite ci-dessus est appliquée à la valeur de profondeur de chacun des pixels $p1_j, p2_j,..., pQ_j$ de la carte de profondeur projetée $D_j^v$ et est itérée pour l'ensemble des cartes de profondeur projetées $D_1^v$ à $D_N^v$.

A l'issue de la modification conditionnelle S2 sont obtenues :

- au moins une carte de profondeur projetée modifiée $\overline{D_j^v}$,
- une carte de profondeur projetée $D_1^v$ non modifiée ou une carte de profondeur projetée modifiée $\overline{D_1^v}$,
- une carte de profondeur projetée $D_2^v$ non modifiée ou une carte de profondeur projetée modifiée $\overline{D_2^v}$,
- ...,
- une carte de profondeur projetée $D_N^v$ non modifiée ou une carte de profondeur projetée modifiée $\overline{D_N^v}$.

De façon connue en soi, en S3, les cartes de profondeur $D_1^v$ ou $\overline{D_1^v}$, $D_2^v$ ou $\overline{D_2^v}$, ..., $D_j^v$ ou $\overline{D_j^v}$, ..., $D_N^v$ ou $\overline{D_N^v}$ sont interpolées respectivement avec les composantes de texture $T_1$, $T_2$,..., $T_N$, par exemple à l'aide d'un algorithme de déformation arrière des textures (en anglais « Texture Backward Warping »), délivrant une image $I_{sth}$ d'une vue synthétisée.

Le procédé de synthèse d'image s'applique aussi bien à des images $I_1$ à $I_N$ non codées, codées ou bien encore décodées. Dans le cas où les images $I_1$ à $I_N$ ont été décodées, le procédé de synthèse peut faire partie du procédé de décodage et être mis en oeuvre par le décodeur, sinon être mis en oeuvre dans un dispositif de synthèse placé en sortie du décodeur.

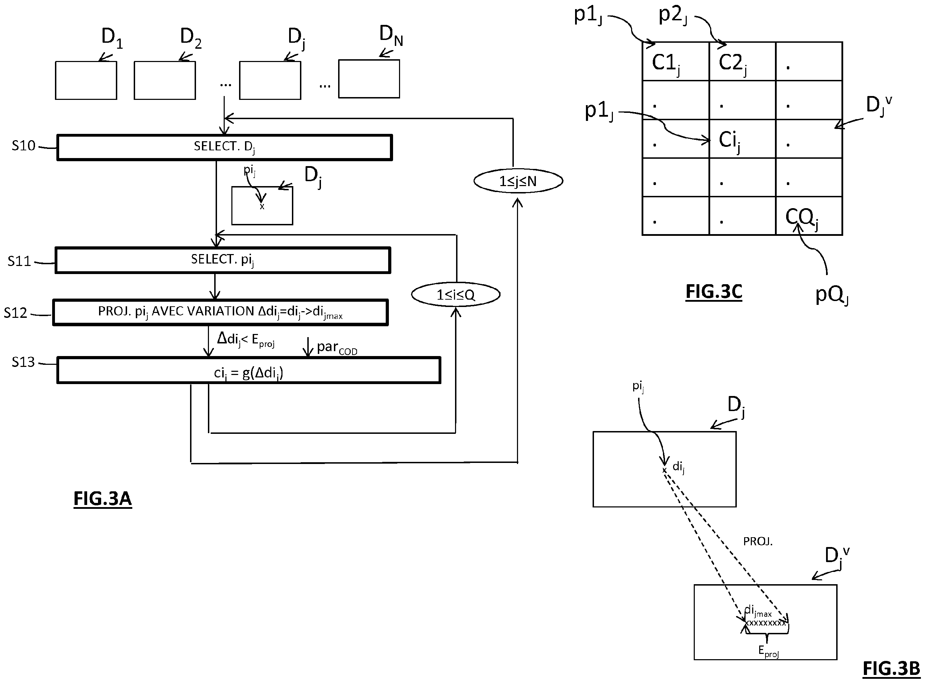

On va maintenant décrire, en référence aux figures 3A et 3B, un mode de réalisation du calcul du niveau de confiance précité.

L'ensemble des cartes de profondeur $D_1$ à $D_N$ est considéré.

En S10, une carte de profondeur est sélectionnée, par exemple la carte de profondeur $D_j$.

En S11, est sélectionné un pixel $pi_j$ de la carte de profondeur $D_j$.

En S12, le pixel $pi_j$ est projeté sur la carte de profondeur projetée $D_j^v$, dans une position identique à celle du pixel $pi_j$ dans la carte de profondeur $D_j$. Au cours de la projection S12, il est procédé à une variation de la valeur de profondeur $di_j$ du pixel $pi_j$ jusqu'à atteindre une valeur de profondeur maximale $di_{jmax}$, tel que :

$$\Delta di_j = di_{jmax} - di_{j<} E_{proj}$$

où $E_{proj}$ est une erreur de projection autorisée du pixel $pi_j$ sur la carte de profondeur projetée $D_j^v$.

Selon un exemple de réalisation, $E_{proj}$ est l'écart de projection du pixel $pi_j$ en nombre de pixels, par exemple 3 pixels.

En S13, le niveau de confiance $Ci_j$ est calculé selon la relation :

$$Ci_j = g(\Delta di_j)$$

où $g$ représente une fonction mathématique prédéfinie, telle que par exemple une fonction puissance ou une fonction exponentielle.

L'application d'une fonction à $\Delta di_j$ permet ainsi de donner plus d'importance à la carte de profondeur située le plus près de la vue à synthétiser.

Les opérations S11 à S13 sont appliquées à tous les pixels de la carte de profondeur $D_j$ sélectionnée de façon à attribuer à chacun de ces pixels un niveau de confiance respectif $C1_j$, $C2_j$,..., $CQ_j$.

A l'issue de ces opérations, en référence à la figure 3C, une carte $Ci_j$ de niveaux de confiance est attribuée en relation avec la carte de profondeur projetée $D_j^v$.

L'ensemble des opérations S10 à S13 est ensuite appliqué à chacune des cartes de profondeur $D_1$ à $D_N$.

Selon un mode de réalisation, dans le cas où les images $I_1$ à $I_N$ ont été codées, le calcul d'un niveau de confiance $Ci_j$ est également fonction d'au moins un paramètre de codage $par_{COMP}$ associé à l'image $I_j$. Un tel paramètre de codage est par exemple la valeur du pas de quantification qui a été utilisé durant le codage de l'image $I_j$, ou encore la position de cette image dans la hiérarchie de codage.

De façon plus générale, le calcul du niveau de confiance $Ci_j$ peut prendre en compte l'ensemble des paramètres de l'image $I_j$ (paramètres intrinsèques et extrinsèques), excepté la texture, à savoir :

- la qualité réelle de la projection et pas seulement la distance de positionnement entre deux caméras qui captent chacune une image donnée parmi les N images $I_1$ à $I_N$,
- le niveau de quantification numérique : une carte de profondeur quantifiée sur 8 bits, dans laquelle seulement un quart de la dynamique est donc utilisé, présente un niveau de confiance plus faible que le niveau de confiance de cette carte de profondeur quantifiée sur 32 bits, car la variation de profondeur $\Delta di_j$ donnant un déplacement de 3 pixels sera plus petite,

- le/les paramètre(s) de compression de l'image $I_j$ (pas de quantification, structure temporelle),
- la qualité intrinsèque de la carte de profondeur $D_j$, c'est-à-dire un faible écart entre la valeur de profondeur en chaque point/pixel de la carte de profondeur $D_j$ et la valeur de profondeur réelle en chaque point correspondant dans la scène 3D,
- l'importance donnée à la carte de profondeur $D_j$, liée à la position de l'image $I_j$ par rapport à l'image $I_{sth}$ à synthétiser.

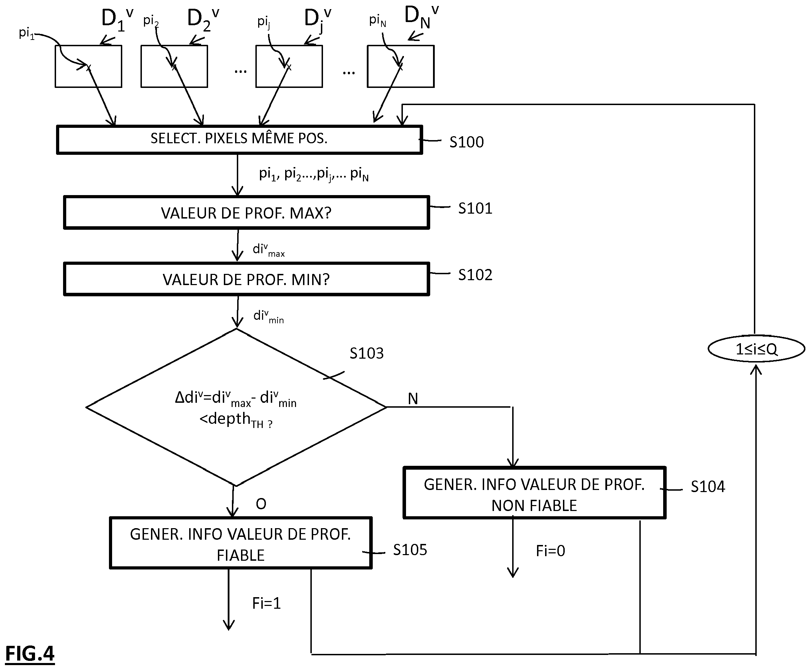

On va maintenant décrire, en référence à la figure 4, un mode de réalisation d'un calcul de l'information de fiabilité précitée.

L'ensemble des cartes de profondeur projetées $D_1^v$ à $D_N^v$ est considéré.

En S100, les pixels $p1_1$, $p1_2$,...,$p1_N$ situés dans la même position (le premier pixel de la première ligne en partant de la gauche), dans chacune des cartes de profondeur projetées $D_1^v$, $D_2^v$,..., $D_j^v$,..., $D_N^v$ sont sélectionnés.

En S101, est déterminé quel est le pixel, parmi les pixels $p1_1$, $p1_2$,...,$p1_N$, qui a la valeur de profondeur maximale $d1^v_{max}$.

En S102, est déterminé quel est le pixel, parmi les pixels $p1_1$, $p1_2$,...,$p1_N$, qui a la valeur de profondeur minimale $d1^v_{min}$.

Durant les opérations S101 et S102, si aucune valeur de profondeur n'a été trouvée en relation avec un pixel considéré dans une carte de profondeur projetée, cette carte de profondeur projetée n'est pas considérée. Comme déjà expliqué plus haut, l'absence de valeur de profondeur peut se produire lors de la projection S1 (figure 1) de chaque carte de profondeur $D_1$ à $D_N$, à l'issue de laquelle tous les pixels de l'image synthétisée $I_{sth}$ ne sont pas nécessairement associés à une valeur de profondeur. Ces pixels sans valeur de profondeur associée constituent des zones de « trou » ou « hole » en anglais.

En S103, la différence $\Delta d1^v = d1^v_{max} - d1^v_{min}$ est comparée à un seuil prédéfini $depth_{TH}$.

Si $\Delta d1^v = d1^v_{max} - d1^v_{min} \geq depth_{TH}$, en S104, une information de fiabilité F1 est mise à une première valeur V3, telle que par exemple V3=0, pour indiquer que la valeur de profondeur des pixels $p1_1$, $p1_2$,...,$p1_N$ qui ont été projetés à la même position, respectivement dans les cartes de profondeur projetées $D_1^v$, $D_2^v$,..., $D_j^v$,..., $D_N^v$, n'est pas fiable.

En variante, la comparaison S104 est $\Delta d1^v = d1^v_{max} - d1^v_{min} > depth_{TH}$.

Si $\Delta d1^v = d1^v_{max} - d1^v_{min} < depth_{TH}$, en S105, une information de fiabilité F1 est mise à une deuxième valeur V4, telle que par exemple V4=1, pour indiquer que la valeur de profondeur des pixels $p1_1$, $p1_2$,...,$p1_N$ qui ont été projetés à la même position, respectivement dans les cartes de profondeur projetées $D_1^v$, $D_2^v$,..., $D_j^v$,..., $D_N^v$, est fiable.

En variante, la comparaison S105 est $\Delta d1^v = d1^v_{max} - d1^v_{min} \leq depth_{TH}$.

Le seuil $depth_{TH}$ est un seuil de différenciation entre le premier plan et l'arrière-plan de la scène 3D. Le seuil $depth_{TH}$ dépend par exemple des variations de valeur de profondeur $\Delta d1_1$, $\Delta d1_2$,..., $\Delta d1_j$, ..., $\Delta d1_N$ qui ont été calculées en S12 (figure 3A) pour générer le niveau de confiance $C1_1$ du pixel $p1_1$, le niveau de confiance $C1_2$ du pixel $p1_2$,..., le niveau de confiance $C1_j$ du pixel $p1_j$,..., le niveau de confiance $C1_N$ du pixel $p1_N$.

Selon un exemple particulier,

$$depth_{TH} = \frac{\sum_{j=1}^{N} \Delta d1_j}{N}$$

Selon un autre exemple particulier,

$$depth_{TH} = \sqrt{\frac{\sum_{y=0}^{height} \sum_{x=0}^{width} \sum_{j=1}^{N} (D_j^v(x,y) - \overline{D^v}(x,y))^2}{(width)*(height)}}$$

avec $\overline{D^v}(x, y) = \frac{\sum_{j=1}^{N} D_j^v(x,y)}{N}$ où (x, y) sont les coordonnées des pixels/points de chaque carte de profondeur.

Les opérations S100 à S103 et S104 ou S105 sont itérées pour les pixels $p2_1$, $p2_2$,...,$p2_N$ situés dans la même position (par exemple le deuxième pixel de la première ligne en partant de la gauche), dans chacune des cartes de profondeur projetées $D_1^v$, $D_2^v$,..., $D_j^v$,..., $D_N^v$, et ainsi de suite jusqu'aux pixels $pQ_1$, $pQ_2$,...,$pQ_N$ situés dans la même position (par exemple le dernier pixel de la dernière ligne en partant de la gauche), dans chacune des cartes de profondeur projetées $D_1^v$, $D_2^v$,..., $D_j^v$,..., $D_N^v$.

7. Modes de réalisation particulier du procédé de synthèse

On va maintenant décrire trois modes de réalisation du procédé de synthèse qui vient d'être décrit ci-dessus.

Selon ces trois modes de réalisation, une image $I_{sth}$ d'une vue synthétisée est obtenue à partir d'images $I_1$, $I_2$, $I_3$, $I_4$ de respectivement quatre vues.

En référence à la figure 1, les cartes de profondeur $D_1$, $D_2$, $D_3$, $D_4$ de respectivement chaque image $I_1$, $I_2$, $I_3$, $I_4$ sont projetées en S1, à une position correspondant à une image $I_{sth}$ d'un vue à synthétiser. Quatre cartes de profondeur projetées $D_1^v$, $D_2^v$, $D_3^v$, $D_4^v$ sont alors obtenues.

Sont fournis en entrée du procédé de synthèse :

- les quatre cartes de profondeur projetées $D_1{}^v$, $D_2{}^v$, $D_3{}^v$, $D_4{}^v$ obtenues en S1,
- les quatre cartes d'attribut $A_1$, $A_2$, $A_3$, $A_4$ correspondantes obtenues en S1,
- le seuil prédéfini $depth_{TH}$.

7.1 Premier mode de réalisation

Afin de mettre en oeuvre l'opération de modification conditionnelle S2 de la figure 1, il est procédé au calcul, en chaque pixel de chacune des cartes de profondeur projetées $D_1{}^v$, $D_2{}^v$, $D_3{}^v$, $D_4{}^v$, de son niveau de confiance respectif, comme illustré en figure 3A.

L'ensemble des cartes de profondeur $D_1$ à $D_4$ est considéré.

En S10, une carte de profondeur est sélectionnée, par exemple la carte de profondeur $D_1$.

En S11, est sélectionné un pixel $pi_1$ de la carte de profondeur $D_1$.

En S12, le pixel $pi_1$ est projeté sur la carte de profondeur projetée $D_1{}^v$, dans une position identique à celle du pixel $pi_1$ de la carte de profondeur $D_1$. Au cours de la projection S12, il est procédé à une variation de la valeur de profondeur $di_1$ du pixel $pi_1$ jusqu'à atteindre une valeur de profondeur maximale $di_{1max}$, tel que :

$$\Delta di_1 = di_{1max} - di_1 \leq E_{proj}$$

où $E_{proj}$ est une erreur de projection autorisée du pixel $pi_1$ sur la carte de profondeur projetée $D_1{}^v$.

Selon un exemple de réalisation préféré, $E_{proj}$ est l'écart de projection du pixel $pi_1$ en nombre de pixels, par exemple 3 pixels. Il est considéré que 3 pixels au maximum d'erreur entraine essentiellement des artefacts de type flou.

Le calcul de $\Delta di_1$ est itératif. A cet effet, la valeur de profondeur $di_1$ est augmentée jusqu'à la valeur de profondeur $di_{1max}$, pour laquelle est obtenu un écart de projection $E_{proj}$ de 3 pixels.

En S13, le niveau de confiance $Ci_1$ est calculé selon la relation $Ci_1 = (\Delta di_1)^2$ pour donner plus d'importance à l'image de la vue la plus proche de l'image $I_{sth}$ de la vue à synthétiser.

Les opérations S11 à S13 sont appliquées à tous les pixels de la carte de profondeur $D_1$ sélectionnée de façon à attribuer à chacun de ces pixels un niveau de confiance respectif $C1_1$, $C2_1$,..., $CQ_1$.

L'ensemble des opérations S10 à S13 est ensuite appliqué à chacune des cartes de profondeur $D_2$, $D_3$, $D_4$.

Le calcul d'un tel niveau de confiance prend donc en compte l'ensemble des paramètres d'une image d'une vue (hors texture), c'est-à-dire la qualité réelle de la projection de sa carte de profondeur, le niveau de quantification de cette image, et pas seulement la distance de positionnement entre deux caméras qui ont capté deux images parmi les images $I_1$ à $I_4$.

Le calcul d'un tel niveau de confiance peut également prendre en entrée des données issues d'un codeur vidéo, comme par exemple un pas de quantification.

Afin de mettre en oeuvre l'opération de modification conditionnelle S2 de la figure 1, il est également procédé au calcul de l'information de fiabilité, en chaque pixel de chacune des cartes de profondeur projetées $D_1{}^v$, $D_2{}^v$, $D_3{}^v$, $D_4{}^v$, comme illustré en figure 4.

L'ensemble des cartes de profondeur projetées $D_1{}^v$ à $D_4{}^v$ est considéré.

En S100, les pixels $p1_1$, $p1_2$,..., $p1_N$ situés dans la même position (le premier pixel de la première ligne en partant de la gauche), dans chacune des cartes de profondeur projetées $D_1{}^v$, $D_2{}^v$, $D_3{}^v$, $D_4{}^v$ sont sélectionnés.

En S101, est déterminé quel est le pixel, parmi les quatre pixels $p1_1$, $p1_2$, $p1_3$, $p1_4$, qui a la valeur de profondeur maximale $d1^v{}_{max}$.

Selon le premier mode de réalisation :

$$d1^v{}_{max} = \text{Max} \left( (A1_1, D_1{}^v), (A1_2, D_2{}^v), (A1_3, D_3{}^v), (A1_4, D_4{}^v) \right)$$

En S102, est déterminé quel est le pixel, parmi les quatre pixels $p1_1$, $p1_2$, $p1_3$, $p1_4$, qui a la valeur de profondeur minimale $d1^v{}_{min}$.

Selon le premier mode de réalisation :

$$d1^v{}_{min} = \text{Min} \left( (A1_1, D_1{}^v), (A1_2, D_2{}^v), (A1_3, D_3{}^v), (A1_4, D_4{}^v) \right)$$

Dans les opérations S101 et S102, $A1_1$ est l'attribut relatif à la projection du pixel $p1_1$ dans la carte de profondeur

projetée $D_1^v$, $A1_2$ est l'attribut relatif à la projection du pixel $p1_2$ dans la carte de profondeur projetée $D_2^v$, $A1_3$ est l'attribut relatif à la projection du pixel $p1_3$ dans la carte de profondeur projetée $D_3^v$, A 14 est l'attribut relatif à la projection du pixel $p1_4$ dans la carte de profondeur projetée $D_4^v$, et en considérant que :

- $A1_1 = V1$ ou $A1_1 = V2$, et/ou
- $A1_2 = V1$ ou $A1_2 = V2$, et/ou
- $A1_3 = V1$ ou $A1_3 = V2$ et/ou
- $A1_4 = V1$ ou $A1_4 = V2$,

sachant que si $A1_1 = V1$ (resp. $A1_2 = V1$, $A1_3 = V1$, $A14 = V1$), aucune valeur de profondeur du pixel $p1_1$ (resp. $p1_2$, $p1_3$, $p1_4$) n'a été projetée sur la carte de profondeur projetée $D_1^v$ (resp $D_2^v$, $D_3^v$, $D_4^v$) et que donc cette valeur n'intervient pas dans le calcul de la valeur de profondeur maximale $d1^v_{max}$ ou de la valeur de profondeur minimale $d1^v_{min}$.

En S103, la différence $d1^v = d1^v_{max} - d1^v_{min}$ est comparée à un seuil prédéfini $depth_{TH}$, selon la relation suivante :

$$\Delta d1^v = d1^v_{max} - d1^v_{min} < depth_{TH}$$

$$avec\ depth_{TH} = \frac{\sum_{j=1}^{4} \Delta d1_j}{4}$$

Si $\Delta d1^v = d1^v_{max} - d1^v_{min} \geq depth_{TH}$, en S104, une information de fiabilité $F_1$ est mise à une première valeur V3, telle que par exemple V3=0, pour indiquer que la valeur de profondeur des pixels $p1_1$, $p1_2$, $p1_3$, $p1_4$ qui ont été projetés à la même position, respectivement dans les 4 cartes de profondeur projetées $D_1^v$, $D_2^v$, $D_3^v$, $D_4^v$, n'est pas fiable.

Si $\Delta d1^v = d1^v_{max} - d1^v_{min} < depth_{TH}$, en S105, une information de fiabilité $F_1$ est mise à une deuxième valeur V4, telle que par exemple V4=1, pour indiquer que la valeur de profondeur des pixels $p1_1$, $p1_2$, $p1_3$, $p1_4$ qui ont été projetés à la même position, respectivement dans les 4 cartes de profondeur projetées $D_1^v$, $D_2^v$, $D_3^v$, $D_4^v$ est fiable.

Les opérations S100 à S103 et S104 ou S105 sont itérées pour les pixels $p2_1$, $p2_2$,..., $p2_N$ situés dans la même position (par exemple le deuxième pixel de la première ligne en partant de la gauche), dans chacune des cartes de profondeur projetées $D_1^v$, $D_2^v$, $D_3^v$, $D_4^v$, et ainsi de suite jusqu'aux pixels $pQ_1$, $pQ_2$,..., $pQ_N$ situés dans la même position (par exemple le dernier pixel de la dernière ligne en partant de la gauche), dans chacune des cartes de profondeur projetées $D_1^v$, $D_2^v$, $D_3^v$, $D_4^v$.

En référence à la figure 1, pour au moins une carte de profondeur projetée considérée $D_j^v$, une modification conditionnelle S2 est appliquée aux valeurs de profondeur $d1^v_j$, $d2^v_j$,..., $dQ^v_j$.

Une telle modification conditionnelle S2 se déroule comme suit.

En S21, pour un pixel donné $pi_1$ ($1 \leq i \leq Q$) de la carte de profondeur projetée $D_1^v$, il est déterminé si l'attribut $Ai_1$ associé au pixel $pi_1$ est à une première valeur V1 ou à une deuxième valeur V2.

Si l'attribut $Ai_1$, a pour valeur V1, le procédé de modification conditionnelle n'est pas mis en oeuvre et le pixel suivant de la carte de profondeur projetée $D_1^v$ est alors considéré.

Si l'attribut $Ai_1$ a pour valeur V2, en S22, il est déterminé si une information de fiabilité $Fi_1$, associée au pixel $pi_1$, est à une première valeur V3 ou à une deuxième valeur V4.

Si $Fi_1 = V3$, la valeur de profondeur $di^v_1$ du pixel $pi_1$ de la carte de profondeur projetée $D_1^v$ n'est pas modifiée.

Si $Fi_1 = V4$, la valeur de profondeur $di^v_1$ du pixel $pi_1$ de la carte de profondeur projetée $D_1^v$ est modifiée en S23.

Selon le premier mode de réalisation, à l'issue de la modification S23, est obtenue une valeur de profondeur modifiée $\overline{di^v_1}$ du pixel $pi_1$ de la carte de profondeur projetée $D_1^v$ selon la relation suivante :

$$\overline{di^v_1} = \frac{\sum_{j=1}^{4}(Ci_j * di^v_j)}{\sum_{j=1}^{4}(Ci_j)}$$

La modification conditionnelle S2 qui vient d'être décrite ci-dessus est appliquée à la valeur de profondeur de chacun des pixels $p1_j$, $p2_j$,..., $pQ_j$ de la carte de profondeur projetée $D_1^v$ et est itérée pour chaque pixel de chacune des autres cartes de profondeur projetées $D_2^v$, $D_3^v$, $D_4^v$.

### 7.2 Deuxième mode de réalisation

Selon ce deuxième mode de réalisation, le calcul du niveau de confiance se déroule de la même façon que dans le premier mode de réalisation.

Le calcul de l'information de fiabilité se déroule de la même façon que dans le premier mode de réalisation jusqu'en S102 inclus.

Il est alors procédé au calcul suivant :

On considère les pixels $p1_1$, $p1_2$,...,$p1_N$ situés dans la même position (le premier pixel de la première ligne en partant de la gauche), dans chacune des cartes de profondeur projetées $D_1^v$, $D_2^v$, $D_3^v$, $D_4^v$.

Il est procédé au calcul de la variance moyenne $Var_{moy}$ des valeurs de profondeur projetées correspondantes $d1^v_1$, $d1^v_2$, $d1^v_3$, $d1^v_4$.

Si $Var_{moy} > depth_{TH}$, en S103, la différence $\Delta d1^v = d1^v_{max} - d1^v_{min}$ est comparée à un seuil prédéfini, selon la relation suivante :

$$\Delta d1^v = d1^v_{max} - d1^v_{min} < Var_{moy}$$

Les opérations S104 ou S105 de la figure 4 se déroulent de la même manière que dans le premier mode de réalisation.

Les opérations S100 à S103 et S104 ou S105 sont itérées pour les pixels $p2_1$, $p2_2$,...,$p2_N$ situés dans la même position (par exemple le deuxième pixel de la première ligne en partant de la gauche), dans chacune des cartes de profondeur projetées $D_1^v$, $D_2^v$, $D_3^v$, $D_4^v$, et ainsi de suite jusqu'aux pixels $pQ_1$, $pQ_2$,...,$pQ_N$ situés dans la même position (par exemple le dernier pixel de la dernière ligne en partant de la gauche), dans chacune des cartes de profondeur projetées $D_1^v$, $D_2^v$, $D_3^v$, $D_4^v$.

La modification conditionnelle S2 est mise en oeuvre de la même manière que dans le premier mode de réalisation.

### 7.3 Troisième mode de réalisation

Selon ce troisième mode de réalisation, le calcul du niveau de confiance se déroule de la même façon que dans le premier mode de réalisation.

Le calcul de l'information de fiabilité se déroule de la même façon que dans le premier mode de réalisation jusqu'en S102 inclus. Selon un exemple ne relevant pas de l'invention, les opérations S103 à S104 ou S105 sont remplacées par ce qui suit :

S'agissant du pixel $p1_1$ de la carte de profondeur projetée $D_1^v$, les différences $d1^v_1 - d1^v_{min}$ et $d1^v_{max} - d1^v_1$ sont chacune comparées à un seuil prédéfini $depth_{TH}$, tel que

$$depth_{TH} = \frac{\sum_{j=1}^{4} \Delta d1_j}{4}.$$

Si $d1^v1 - d1^v_{min} \geq depth_{TH}$, une information de fiabilité $F1_1$ est mise à une première valeur V3, telle que par exemple V3=0, pour indiquer que la valeur de profondeur du pixel $p1_1$ dans la carte de profondeur projetée $D_1^v$ n'est pas fiable par rapport à la valeur de profondeur minimale $d1^v_{min}$.

En variante, la comparaison est $d1^v_1 - d1^v_{min} > depth_{TH}$.

Si $d1^v_1 - d1^v_{min} < depth_{TH}$, une information de fiabilité $F1_1$ est mise à une deuxième valeur V4, telle que par exemple V4=1, pour indiquer que la valeur de profondeur du pixel $p1_1$ dans la carte de profondeur projetée $D_1^v$ est fiable par rapport à la valeur de profondeur minimale $d1^v_{min}$.

En variante, la comparaison est $d1^v_1 - d1^v_{min} \leq depth_{TH}$.

Si $d1^v_{max} - d1^v_1 \geq depth_{TH}$, une information de fiabilité $F1_{1min}$ est mise à une première valeur V3, telle que par exemple V3=0, pour indiquer que la valeur de profondeur du pixel $p1_1$ dans la carte de profondeur projetée $D_1^v$ n'est pas fiable par rapport à la valeur de profondeur maximale $d1^v_{max}$.

En variante, la comparaison est $d1^v_{max} - d1^v_i > depth_{TH}$.

Si $d1^v_{max} - d1^v_1 < depth_{TH}$, une information de fiabilité $F1_{1max}$ est mise à une deuxième valeur V4, telle que par exemple V4=1, pour indiquer que la valeur de profondeur du pixel $p1_1$ dans la carte de profondeur projetée $D_1^v$ est fiable par rapport à la valeur de profondeur maximale $d1^v_{max}$.

En variante, la comparaison est $d1^v_{max} - d1^v_1 \leq depth_{TH}$.

Le calcul qui vient d'être décrit est itéré pour le pixel $p1_2$ de la carte de profondeur projetée $D_2^v$, et ainsi de suite jusqu'au pixel $p1_4$ de la carte de profondeur projetée $D_4{}^v$.

Le calcul est ensuite itéré pour chaque pixel suivant $p2_1$ à $pQ_1$ de la carte de profondeur projetée $D_1{}^v$, pour chaque pixel suivant $p2_2$ à $pQ_2$ de la carte de profondeur projetée $D_2{}^v$, pour chaque pixel suivant $p2_3$ à $pQ_3$ de la carte de profondeur projetée $D_3{}^v$, pour chaque pixel suivant $p2_4$ à $pQ_4$ de la carte de profondeur projetée $D_4{}^v$.

La modification conditionnelle S2 est alors mise en oeuvre de la manière suivante.

Pour un pixel donné $pi_1$ ($1 \leq i \leq Q$) de la carte de profondeur projetée $D_1{}^v$, il est déterminé si :

- l'information de fiabilité $Fi_{1min}$, associée au pixel $pi_1$, est à 0 ou 1,
- l'information de fiabilité $Fi_{1max}$, associée au pixel $pi_1$, est à 0 ou 1.

Si $Fi_{1min}=0$ et $Fi_{1max}=0$, la valeur de profondeur $di^v{}_1$ du pixel $pi_1$ de la carte de profondeur projetée $D_1{}^v$ n'est pas modifiée.

Si $Fi_{1min}=1$ et $Fi_{1max}=0$, la valeur de profondeur $di^v{}_{1min}$ du pixel $pi_1$ de la carte de profondeur projetée $D_1{}^v$ est

modifiée en S23 selon la relation suivante : $\overline{di^v_{1min}}=$ moyenne$((A i_1,\ C i_1,\ di^v{}_1)$ et/ou $(A i_2, C i_2, di^v{}_2)$ et/ou $(A i_3,$ $C i_3, di^v{}_3)$ et/ou $(A i_4, C i_4, di^v{}_4))$, selon que $A i_2=V1$ ou $A i_2=V2$, $A i_3=V1$ ou $A i_3=V2$, $A i_4=V1$ ou $A i_4=V2$.

Selon un exemple particulier, seules les valeurs de profondeur $di^v{}_1$ et $di^v{}_2$ sont prises en compte dans la modification de $di^v{}_{1min}$. La valeur de profondeur $di^v{}_{1min}$ du pixel $pi_1$ de la carte de profondeur projetée $D_1{}^v$ est alors modifiée selon la relation suivante :

$$\overline{di^v_{1min}} = \frac{Ci_1 * di^v_1 + Ci_2 * di^v_2}{Ci_1 + Ci_2}$$

Si $Fi_{1min}=0$ et $Fi_{1max}=1$, la valeur de profondeur $di^v{}_{1max}$ du pixel $pi_1$ de la carte de profondeur projetée $D_1{}^v$ est

modifiée selon la relation suivante : $\overline{di^v_{1max}}=$ moyenne$((A i_1,\ C i_1,\ di^v{}_1)$ et/ou $(A i_2, C i_2, di^v{}_2)$ et/ou $(A i_3, C i_3,$ $di^v{}_3)$ et/ou $(A i_4, C i_4, di^v{}_4))$, selon que $A i_2=V1$ ou $A i_2=V2$, $A i_3=V1$ ou $A i_3=V2$, $A i_4=V1$ ou $A i_4=V2$.

Selon un exemple particulier, seules les valeurs de profondeur $di^v{}_1$, $di^v{}_3$ et $di^v{}_4$ sont prises en compte dans la modification de $di^v{}_{1max}$. La valeur de profondeur $di^v{}_{1max}$ du pixel $pi_1$ de la carte de profondeur projetée $D_1{}^v$ est alors modifiée selon la relation suivante :

$$\overline{di^v_{1max}} = \frac{Ci_1 * di^v_1 + Ci_3 * di^v_3 + Ci_4 * di^v_4}{Ci_1 + Ci_3 + Ci_4}$$

Si $Fi_{1min}=1$ et $Fi_{1max}=1$ :

- la valeur de profondeur $di^v{}_{1min}$ du pixel $pi_1$ de la carte de profondeur projetée $D_1{}^v$ est modifiée selon la relation suivante :

$$\overline{di^v_{1min}} = \frac{\sum_{j=1}^{4}(Ci_j * di^v_j)}{\sum_{j=1}^{4}(Ci_j)}$$

- la valeur de profondeur $di^v{}_{1max}$ du pixel $pi_1$ de la carte de profondeur projetée $D_1{}^v$ est modifiée selon la relation suivante :

$$\overline{di^v_{1max}} = \frac{\sum_{j=1}^{4}(Ci_j * di^v_j)}{\sum_{j=1}^{4}(Ci_j)}$$

La modification conditionnelle S2 qui vient d'être décrite ci-dessus est appliquée à la valeur de profondeur maximale et/ou minimale de chacun des pixels p1$_j$, p2$_j$,..., pQ$_j$ de la carte de profondeur projetée D$_1^v$ et est itérée pour chaque pixel de chacune des autres cartes de profondeur projetées D$_2^v$, D$_3^v$, D$_4^v$.

A l'issue de la modification conditionnelle S2 sont obtenues, en fonction de la valeur des informations de fiabilité Fi$_{jmin}$ et Fi$_{jmax}$ :

- une carte de profondeur projetée D$_1^v$ non modifiée ou bien une carte de profondeur projetée modifiée $\overline{D_{1min}^v}$ et/ou une carte de profondeur projetée modifiée $\overline{D_{1max}^v}$,

- une carte de profondeur projetée D$_2^v$ non modifiée ou bien une carte de profondeur projetée modifiée $\overline{D_{2min}^v}$ et/ou une carte de profondeur projetée modifiée $\overline{D_{2max}^v}$,

- une carte de profondeur projetée D$_3^v$ non modifiée ou bien une carte de profondeur projetée modifiée $\overline{D_{3min}^v}$ et/ou une carte de profondeur projetée modifiée $\overline{D_{3max}^v}$,

- une carte de profondeur projetée D$_4^v$ non modifiée ou bien une carte de profondeur projetée modifiée $\overline{D_{4min}^v}$ et/ou une carte de profondeur projetée modifiée $\overline{D_{4max}^v}$.

8. Exemple de mise en oeuvre de dispositif de synthèse

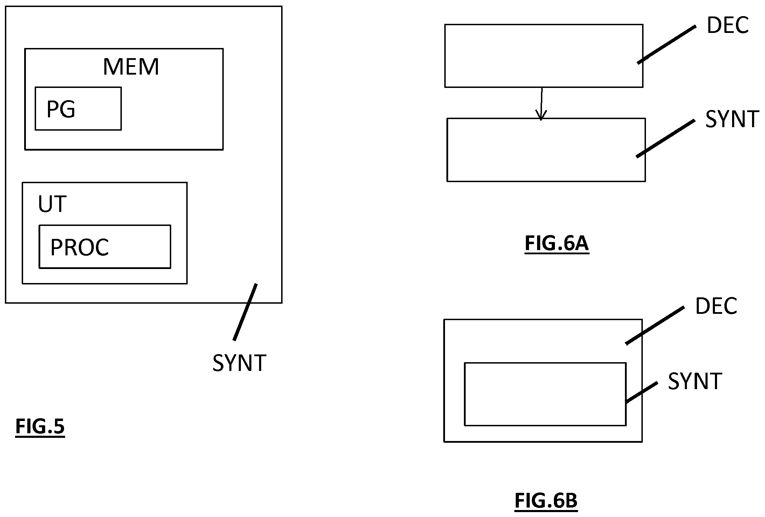

La figure 5 présente la structure simplifiée d'un dispositif de synthèse SYNT adapté pour mettre en oeuvre le procédé de synthèse selon l'un quelconque des modes particuliers de réalisation de l'invention.

Selon un mode particulier de réalisation de l'invention, les actions exécutées par le procédé de synthèse sont mises en oeuvre par des instructions de programme d'ordinateur. Pour cela, le dispositif de synthèse SYNT a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les actions du procédé de synthèse tel que décrit ci-dessus, lorsque le programme est exécuté par le processeur PROC.

A l'initialisation, les instructions de code du programme d'ordinateur PG sont par exemple chargées dans une mémoire RAM (non représentée) avant d'être exécutées par le processeur PROC. Le processeur PROC de l'unité de traitement UT met notamment en oeuvre les actions du procédé de synthèse décrit ci-dessus, selon les instructions du programme d'ordinateur PG.

Dans le cas où les images I$_1$ à I$_N$ ont été préalablement décodées par un décodeur DEC, selon un procédé de décodage adapté :

- le dispositif de synthèse SYNT est agencé en sortie du décodeur DEC, comme illustré sur la figure 6A, ou
- le dispositif de synthèse SYNT fait partie du décodeur DEC, comme illustré sur la figure 6B.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

1. Procédé de synthèse d'une image (I$_{sth}$) d'une vue à partir d'images de N (N≥2) vues (T$_1$, D$_1$; T$_2$, D$_2$;... ; T$_N$, D$_N$), mis en oeuvre par un dispositif de synthèse d'images, les images des N vues comprenant N composantes de texture et N cartes de profondeur, ledit procédé comprenant ce qui suit :

- projeter (S1), à une position correspondant à l'image de la vue à synthétiser, N cartes de profondeur associées respectivement aux N vues, fournissant N cartes de profondeur projetées correspondantes,

ledit procédé de synthèse étant **caractérisé en ce que** :

- pour au moins un pixel donné ($pi_j$) d'au moins une carte de profondeur projetée ($D_j^v$) courante, pour lequel une valeur de profondeur ($di_j^v$) a été associée à l'issue de la projection :

- déterminer une valeur de profondeur maximale, respectivement minimale, d'un pixel situé dans une des N cartes de profondeur projetées et ayant la même position que celle dudit au moins un pixel donné,
- comparer à un seuil une différence entre les valeurs de profondeur maximale et minimale,
- calculer une information de fiabilité de ladite valeur de profondeur, en fonction du résultat de la comparaison,
- modifier (S2) ladite valeur de profondeur dudit au moins un pixel donné si ladite information de fiabilité ($Fi_j$) associée à ladite valeur de profondeur est à une valeur prédéfinie, ladite modification utilisant la valeur de profondeur d'un pixel de position correspondante à celle dudit au moins un pixel donné, dans au moins une autre carte de profondeur projetée, ce qui génère au moins une carte de profondeur projetée modifiée

$$\left( \overline{D_j^v} \right),$$

- interpoler les N cartes de profondeur projetées comprenant ladite au moins une carte de profondeur projetée modifiée, et interpoler les N composantes de texture.

2. Procédé selon la revendication 1, dans lequel ladite modification (S2) utilise une pondération de la valeur de profondeur du pixel de position correspondante audit au moins un pixel donné, dans ladite au moins une autre carte de profondeur projetée.

3. Procédé selon la revendication 2, dans lequel le niveau de confiance d'un pixel d'une carte de profondeur donnée est calculé (S12) comme une variation de la valeur de profondeur dudit pixel, ladite variation correspondant à une erreur de projection en nombre de pixels autorisé.

4. Procédé selon la revendication 3, dans lequel le niveau de confiance d'un pixel est pondéré par un paramètre de codage ($par_{COMP}$) de l'image de la vue à laquelle est associée la carte de profondeur qui contient ledit pixel.

5. Procédé selon l'une quelconque des revendications 1 à 4, dans lequel la modification de la valeur de profondeur du pixel donné consiste à remplacer (S23) ladite valeur de profondeur par une valeur qui est calculée à partir de ladite valeur de profondeur et de la valeur de profondeur du pixel de position correspondante à celle dudit au moins un pixel donné dans ladite au moins une autre carte de profondeur projetée, lesdites valeurs de profondeur étant pondérées chacune par leur niveau de confiance respectif.

6. Procédé selon l'une quelconque des revendications 1 à 5, dans lequel le seuil de comparaison est égal à la moyenne des N variations de la valeur de profondeur de chaque pixel de position correspondante à celle dudit pixel donné dans leur carte de profondeur respective.

7. Procédé selon l'une quelconque des revendications 1 à 5, dans lequel le seuil de comparaison est égal à la moyenne des N variances de la valeur de profondeur de chaque pixel de position correspondante à celle dudit pixel donné dans leur carte de profondeur respective.

8. Dispositif de synthèse (SYNT) d'une image d'une vue à partir d'images de N (N$\geq$2) vues ($T_1$, $D_1$; $T_2$, $D_2$;... ; $T_N$, $D_N$), les images des N vues comprenant N composantes de texture et N cartes de profondeur, ledit dispositif de synthèse comprenant un processeur qui est configuré pour mettre en oeuvre ce qui suit :

- projeter, à une position correspondant à l'image de la vue à synthétiser, N cartes de profondeur associées respectivement aux N vues, fournissant N cartes de profondeur projetées correspondantes,

ledit dispositif de synthèse étant **caractérisé en ce que** le processeur met en oeuvre ce qui suit :

- pour au moins un pixel donné ($pi_j$) d'au moins une carte de profondeur projetée ($D_j^v$) courante, pour lequel une valeur de profondeur a été associée à l'issue de la projection :

- déterminer une valeur de profondeur maximale, respectivement minimale, d'un pixel situé dans une des N cartes de profondeur projetées et ayant la même position que celle dudit au moins un pixel donné,
- comparer à un seuil une différence entre les valeurs de profondeur maximale et minimale,
- calculer une information de fiabilité de ladite valeur de profondeur en fonction du résultat de la comparaison,

- modifier la valeur de profondeur dudit au moins un pixel donné si ladite information de fiabilité ($Fi_j$) associée à ladite valeur de profondeur est à une valeur prédéfinie, ladite modification utilisant la valeur de profondeur d'un pixel de position correspondante à celle dudit au moins un pixel donné, dans au moins une autre carte de profondeur projetée, ce qui génère au moins une carte de profondeur projetée modifiée $(\overline{D_j^v})$,
- interpoler les N cartes de profondeur projetées comprenant ladite au moins une carte de profondeur projetée modifiée, et interpoler les N composantes de texture.

9. Procédé de décodage d'un signal de données représentatif d'un ensemble d'images de N (N≥2) vues codées, comprenant ce qui suit :

- décoder les images des N vues codées, produisant un ensemble d'images de N vues décodées,
- synthétiser une image d'une vue à partir dudit ensemble d'images de N vues décodées conformément au procédé de synthèse selon l'une quelconque des revendications 1 à 8.

10. Dispositif de décodage d'un signal de données représentatif d'un ensemble d'images de N (N≥2) vues codées, ledit dispositif de décodage comprenant un processeur qui est configuré pour mettre en oeuvre ce qui suit :

- décoder les images des N vues codées, produisant un ensemble d'images de N vues décodées,
- synthétiser une image d'une vue à partir dudit ensemble d'images de N vues décodées conformément au procédé de synthèse selon l'une quelconque des revendications 1 à 8.

11. Programme d'ordinateur comportant des instructions comprenant des instructions de code de programme pour l'exécution des étapes du procédé de synthèse selon l'une quelconque des revendications 1 à 8 ou du procédé de décodage selon la revendication 9, lorsqu'il est exécuté sur un ordinateur.

12. Support d'informations lisible par un ordinateur, et comportant des instructions d'un programme d'ordinateur selon la revendication 11.


**Patentansprüche**

1. Verfahren zur Synthese eines Bildes ($I_{sth}$) einer Ansicht anhand von Bildern von N (N≥2) Ansichten ($T_1$, $D_1$; $T_2$, $D_2$;... ; $T_N$, $D_N$), umgesetzt durch eine Bildsynthesevorrichtung, wobei die Bilder der N Ansichten N Texturkomponenten und N Tiefenkarten beinhalten, wobei das Verfahren Folgendes beinhaltet:

- Projizieren (S1), auf eine Position, die dem zu synthetisierenden Bild der Ansicht entspricht, von N Tiefenkarten, die jeweils mit den N Ansichten assoziiert sind, wodurch N entsprechende projizierte Tiefenkarten bereitgestellt werden,

wobei das Syntheseverfahren **dadurch gekennzeichnet ist, dass**:

- für mindestens ein gegebenes Pixel ($pi_j$) mindestens einer aktuellen projizierten Tiefenkarte ($D_j^V$), dem nach der Projektion ein Tiefenwert ($di_j^v$) zugeordnet wurde:

  - Bestimmen eines Werts einer maximalen bzw. minimalen Tiefe eines Pixels, das sich in einer der N projizierten Tiefenkarten befindet und die gleiche Position wie die des mindestens einen gegebenen Pixels aufweist,
  - Vergleichen, mit einer Schwelle, einer Differenz zwischen dem maximalen und minimalen Tiefenwert,
  - Berechnen einer Zuverlässigkeitsinformation des Tiefenwerts in Abhängigkeit von dem Ergebnis des Vergleichs,

  - Modifizieren (S2) des Tiefenwerts des mindestens einen gegebenen Pixels, wenn sich die dem Tiefenwert zugeordnete Zuverlässigkeitsinformation ($Fi_j$) auf einem vordefinierten Wert befindet, wobei die Modifizierung den Tiefenwert eines Pixels mit einer Position, die derjenigen des mindestens einen gegebenen Pixels entspricht, in mindestens einer anderen projizierten Tiefenkarte verwendet, wodurch mindestens eine modifizierte projizierte Tiefenkarte $\left(\overline{D_j^v}\right)$ generiert wird,
- Interpolieren der N projizierten Tiefenkarten, die die mindestens eine modifizierte projizierte Tiefenkarte beinhalten, und Interpolieren der N Texturkomponenten.

2.  Verfahren nach Anspruch 1, wobei die Modifizierung (S2) eine Gewichtung des Tiefenwerts des Pixels mit einer dem mindestens einen gegebenen Pixel entsprechenden Position in der mindestens einen anderen projizierten Tiefenkarte verwendet.

3.  Verfahren nach Anspruch 2, wobei das Vertrauensniveau eines Pixels einer gegebenen Tiefenkarte als eine Variation des Tiefenwerts des Pixels berechnet (S12) wird, wobei die Variation einem Projektionsfehler mit autorisierter Pixelanzahl entspricht.

4.  Verfahren nach Anspruch 3, wobei das Vertrauensniveau eines Pixels durch einen Codierungsparameter (par$_{COMP}$) des Bildes der Ansicht, dem die Tiefenkarte, die das Pixel enthält, zugeordnet ist, gewichtet wird.

5.  Verfahren nach einem beliebigen der Ansprüche 1 bis 4, wobei die Modifizierung des Tiefenwerts des gegebenen Pixels darin besteht, den Tiefenwert durch einen Wert zu ersetzen (S23), der anhand des Tiefenwerts und des Tiefenwerts des Pixels mit einer Position, die derjenigen des mindestens einen gegebenen Pixels entspricht, in der mindestens einen anderen projizierten Tiefenkarte berechnet wird, wobei die Tiefenwerte jeweils durch ihr jeweiliges Vertrauensniveau gewichtet werden.

6.  Verfahren nach einem beliebigen der Ansprüche 1 bis 5, wobei die Vergleichsschwelle gleich dem Mittelwert der N Variationen des Tiefenwerts jedes Pixels mit einer Position, die derjenigen des gegebenen Pixels entspricht, in ihrer jeweiligen Tiefenkarte ist.

7.  Verfahren nach einem beliebigen der Ansprüche 1 bis 5, wobei die Vergleichsschwelle gleich dem Mittelwert der N Varianzen des Tiefenwerts jedes Pixels mit einer Position, die derjenigen des gegebenen Pixels entspricht, in ihrer jeweiligen Tiefenkarte ist.

8.  Vorrichtung zur Synthese (SYNT) eines Bildes einer Ansicht anhand von Bildern von N (N≥2) Ansichten (T$_1$, D$_1$; T$_2$, D$_2$;... ; T$_N$, D$_N$), wobei die Bilder der N Ansichten N Texturkomponenten und N Tiefenkarten beinhalten, wobei die Synthesevorrichtung einen Prozessor beinhaltet, der dazu konfiguriert ist, Folgendes umzusetzen:

    - Projizieren, auf eine Position, die dem zu synthetisierenden Bild der Ansicht entspricht, von N Tiefenkarten, die jeweils mit den N Ansichten assoziiert sind, wodurch N entsprechende projizierte Tiefenkarten bereitgestellt werden,

    wobei die Synthesevorrichtung **dadurch gekennzeichnet ist, dass** der Prozessor Folgendes umsetzt:

    - für mindestens ein gegebenes Pixel (pi$_j$) mindestens einer aktuellen projizierten Tiefenkarte (D$_j$$^V$), dem nach der Projektion ein Tiefenwert zugeordnet wurde:

        - Bestimmen eines Werts einer maximalen bzw. minimalen Tiefe eines Pixels, das sich in einer der N projizierten Tiefenkarten befindet und die gleiche Position wie die des mindestens einen gegebenen Pixels aufweist,
        - Vergleichen, mit einer Schwelle, einer Differenz zwischen dem maximalen und minimalen Tiefenwert,
        - Berechnen einer Zuverlässigkeitsinformation des Tiefenwerts in Abhängigkeit von dem Ergebnis des Vergleichs,
        - Modifizieren des Tiefenwerts des mindestens einen gegebenen Pixels, wenn sich die dem Tiefenwert zugeordnete Zuverlässigkeitsinformation (Fi$_j$) auf einem vordefinierten Wert befindet, wobei die Modifizierung den Tiefenwert eines Pixels mit einer Position, die derjenigen des mindestens einen gegebenen Pixels entspricht, in mindestens einer anderen projizierten Tiefenkarte verwendet, wodurch mindestens eine modifizierte projizierte Tiefenkarte $\left(\overline{D_j^v}\right)$ generiert wird,
        - Interpolieren der N projizierten Tiefenkarten, die die mindestens eine modifizierte projizierte Tiefenkarte beinhalten, und Interpolieren der N Texturkomponenten.

9. Verfahren zur Decodierung eines Datensignals, das für eine Gesamtheit von Bildern von N (N≥2) codierten Ansichten repräsentativ ist, und das Folgendes beinhaltet:

- Decodieren der Bilder der N codierten Ansichten, wodurch eine Gesamtheit von Bildern von N decodierten Ansichten erzeugt wird,
- Synthetisieren eines Bildes einer Ansicht anhand der Gesamtheit von Bildern von N decodierten Ansichten gemäß dem Syntheseverfahren nach einem beliebigen der Ansprüche 1 bis 8.

10. Vorrichtung zur Decodierung eines Datensignals, das für eine Gesamtheit von Bildern von N (N≥2) codierten Ansichten repräsentativ ist, wobei die Decodierungsvorrichtung einen Prozessor beinhaltet, der dazu konfiguriert ist, Folgendes umzusetzen:

- Decodieren der Bilder der N codierten Ansichten, wodurch eine Gesamtheit von Bildern von N decodierten Ansichten erzeugt wird,
- Synthetisieren eines Bildes einer Ansicht anhand der Gesamtheit von Bildern von N decodierten Ansichten gemäß dem Syntheseverfahren nach einem beliebigen der Ansprüche 1 bis 8.

11. Computerprogramm, das Anweisungen umfasst, die Programmcodeanweisungen zur Ausführung der Schritte des Syntheseverfahrens nach einem beliebigen der Ansprüche 1 bis 8 oder des Decodierungsverfahrens nach Anspruch 9 beinhalten, wenn es auf einem Computer ausgeführt wird.

12. Datenträger, der von einem Computer gelesen werden kann und Anweisungen eines Computerprogramms nach Anspruch 11 umfasst.


**Claims**

1. Method for synthesizing an image ($I_{sth}$) of a view on the basis of images of N (N≥2) views ($T_1$, $D_1$; $T_2$, $D_2$; ... ; $T_N$, $D_N$), implemented by an image synthesis device, the images of the N views comprising N texture components and N depth maps, said method comprising the following:

- projecting (S1), to a position corresponding to the image of the view to be synthesized, N depth maps associated with the N views, respectively, providing N corresponding projected depth maps,

said synthesis method being **characterized in that**:

- for at least one given pixel ($pi_j$) of at least one current projected depth map ($D_j^V$), for which a depth value ($di^v_j$) has been associated after projection:

- determining a maximum or minimum depth value, respectively, of a pixel located in one of the N projected depth maps and having the same position as that of said at least one given pixel,
- comparing a difference between the maximum and minimum depth values with a threshold,
- calculating an item of reliability information for said depth value, according to the result of the comparison,
- modifying (S2) said depth value of said at least one given pixel if said item of reliability information ($Fi_j$) associated with said depth value is at a predefined value, said modification using the depth value of a pixel whose position corresponds to that of said at least one given pixel, in at least one other projected depth map, which generates at least one modified projected depth map $\left(\overline{D_j^v}\right)$,
- interpolating the N projected depth maps comprising said at least one modified projected depth map, and interpolating the N texture components.

2. Method according to Claim 1, wherein said modification (S2) uses a weighting of the depth value of the pixel whose position corresponds to said at least one given pixel, in said at least one other projected depth map.

3. Method according to Claim 2, wherein the confidence level of a pixel of a given depth map is calculated (S12) as a variation in the depth value of said pixel, said variation corresponding to a projection error in terms of allowed number of pixels.

4. Method according to Claim 3, wherein the confidence level of a pixel is weighted by a coding parameter (par$_{COMP}$) of the image of the view with which the depth map that contains said pixel is associated.

5. Method according to any one of Claims 1 to 4, wherein the modification of the depth value of the given pixel consists in replacing (S23) said depth value with a value that is calculated on the basis of said depth value and of the depth value of the pixel whose position corresponds to that of said at least one given pixel in said at least one other projected depth map, said depth values each being weighted by their respective confidence level.

6. Method according to any one of Claims 1 to 5, wherein the comparison threshold is equal to the mean of the N variations in the depth value of each pixel whose position corresponds to that of said given pixel in their respective depth map.

7. Method according to any one of Claims 1 to 5, wherein the comparison threshold is equal to the mean of the N variances in the depth value of each pixel whose position corresponds to that of said given pixel in their respective depth map.

8. Device (SYNT) for synthesizing an image of a view on the basis of images of N (N≥2) views (T$_1$, D$_1$; T$_2$, D$_2$; ... ; T$_N$, D$_N$), the images of the N views comprising N texture components and N depth maps, said synthesis device comprising a processor that is configured to implement the following:

   - projecting, to a position corresponding to the image of the view to be synthesized, N depth maps associated with the N views, respectively, providing N corresponding projected depth maps,

   said synthesis device being **characterized in that** the processor implements the following:

   - for at least one given pixel (pi$_j$) of at least one current projected depth map (D$_j^V$), for which a depth value has been associated after projection:

      - determining a maximum or minimum depth value, respectively, of a pixel located in one of the N projected depth maps and having the same position as that of said at least one given pixel,
      - comparing a difference between the maximum and minimum depth values with a threshold,
      - calculating an item of reliability information for said depth value according to the result of the comparison,
      - modifying the depth value of said at least one given pixel if said item of reliability information (Fi$_j$) associated with said depth value is at a predefined value, said modification using the depth value of a pixel whose position corresponds to that of said at least one given pixel, in at least one other projected depth map, which generates at least one modified projected depth map $\left( \overline{D_j^v} \right)$,
      - interpolating the N projected depth maps comprising said at least one modified projected depth map, and interpolating the N texture components.

9. Method for decoding a data signal representative of a set of images of N (N≥2) coded views, comprising the following:

   - decoding the images of the N coded views, producing a set of images of N decoded views,
   - synthesizing an image of a view on the basis of said set of images of N decoded views in accordance with the synthesis method according to any one of Claims 1 to 8.

10. Device for decoding a data signal representative of a set of images of N (N≥2) coded views, said decoding device comprising a processor that is configured to implement the following:

   - decoding the images of the N coded views, producing a set of images of N decoded views,
   - synthesizing an image of a view on the basis of said set of images of N decoded views in accordance with the synthesis method according to any one of Claims 1 to 8.

11. Computer program comprising instructions comprising program code instructions for executing the steps of the synthesis method according to any one of Claims 1 to 8 or of the decoding method according to Claim 9, when it is executed on a computer.

12. Computer-readable information medium containing instructions of a computer program according to Claim 11.

$I_1 (D_1, T_1),..., I_N(T_N, D_N)$

| $T_1$ | ... | $T_j$ | ... | $T_N$ |

| $D_1$ | ... | $D_j$ | ... | $D_N$ |

PROJ -> $I_{sth}$ — S1

| $D_1^v$ | $A_1$ | ... | $D_j^v$ | $A_j$ | ... | $D_N^v$ | $A_N$ |

$C1_1,..., CQ_1$   $C1_j,..., CQ_j$   $D_j^v$   $C1_N,..., CQ_N$

**MODIF. CONDITION. ($1 \leq j \leq N$)**

V1    $Ai_j$ S21    V2

=?    $di_j^v$   S22

$1 \leq i \leq Q$ — S2

V3    $Fi_j$

S23

=?    V4

$di_j^v$

$\overline{di_j^v} = fct((Ci_1, di_1^v), (Ci_2, di_2^v),..., (Ci_j, di_j^v),..., (Ci_N, di_N^v))$

$\overline{di_j^v}$

$D_1^v / \overline{D_1^v}$   ...   $\overline{D_j^v}$   ...   $D_N^v / \overline{D_N^v}$

INTERPOL. — S3

$I_{sth}$

**FIG.1**

FIG.2

EP 3 878 170 B1

$D_1$  $D_2$  $D_j$  $D_N$

... ...

S10 — SELECT. $D_j$

$pi_j$  $D_j$

x

$1 \leq j \leq N$

S11 — SELECT. $pi_j$

$1 \leq i \leq Q$

S12 — PROJ. $pi_j$ AVEC VARIATION $\Delta di_j = di_j \rightarrow di_{jmax}$

$\Delta di_j < E_{proj}$   $par_{COD}$

S13 — $ci_j = g(\Delta di_j)$

**FIG.3A**

$p1_J$  $p2_J$

| $C1_j$ | $C2_j$ | . |
|--------|--------|---|
| . | . | . |
| . | $Ci_j$ | . |
| . | . | . |
| . | . | $CQ_j$ |

$p1_J$

$Ci_j$

$D_J^v$

$CQ_j$

$pQ_J$

**FIG.3C**

$pi_j$

$D_j$

$di_j$

x

PROJ.

$D_j^v$

$di_{jmax}$

xxxxxxxx

$E_{proj}$

**FIG.3B**

EP 3 878 170 B1

$D_1^v$ $pi_2$ $D_2^v$ $pi_j$ $D_j^v$ $pi_N$ $D_N^v$

$pi_1$

...    ...

SELECT. PIXELS MÊME POS. — S100

$pi_1, pi_2..., pi_j,... pi_N$

VALEUR DE PROF. MAX? — S101

$di^v_{max}$

VALEUR DE PROF. MIN? — S102

$di^v_{min}$

S103

$\Delta di^v = di^v_{max} - di^v_{min} < depth_{TH}$ ?

N

$1 \leq i \leq Q$

GENER. INFO VALEUR DE PROF. NON FIABLE — S104

Fi=0

O

GENER. INFO VALEUR DE PROF. FIABLE — S105

Fi=1

**FIG.4**

**FIG.5**

MEM
PG
UT
PROC
SYNT

**FIG.6A**

DEC
SYNT

**FIG.6B**

DEC
SYNT

EP 3 878 170 B1

**RÉFÉRENCES CITÉES DANS LA DESCRIPTION**

**Documents brevets cités dans la description**

- WO 2013030452 A
- WO 2016067541 A